# EUROPEAN PATENT SPECIFICATION

(11) **EP 2 311 778 B1**
(45) Date of publication and mention of the grant of the patent: **09.07.2014**
(21) Application number: 10187957.5
(22) Date of filing: 18.10.2010
(51) Int. Cl.: C02F 1/28, B01D 24/14, B01D 35/157, A01K 63/04

(54) **Pond water filtration apparatus**
Teichwasserfiltervorrichtung
Dispositif de filtration d'eau d'étang

(30) Priority: 19.10.2009 GB 0918242
(43) Date of publication of application: 20.04.2011
(73) Proprietor: Hanford, Douglas, Upminster, Essex RM14 3PA (GB); Hanford, James, Upminster, Essex RM14 3PA (GB)
(72) Inventor: Hanford, Douglas, Upminster, Essex RM14 3PA (GB); Hanford, James, Upminster, Essex RM14 3PA (GB)
(74) Representative: Sanderson & Co.

(56) References cited:
- BE-A6- 1 010 742
- DE-A1- 3 805 770
- DE-B3-102008 012 271
- DE-U1- 29 521 143

## Description

This invention relates to pond filtration apparatus. In particular this invention relates to such apparatus incorporating shower filters, for use in pond or aquarium systems.

Shower filters are often used in ponds and aquariums, and generally comprise a tank which contains a filter medium. The filters operate by pumping water to the top of the tank where it is dispensed over the filter medium. The dispensing of the water through the medium encourages the breakdown of harmful toxins and also allows oxygen to circulate within the water. As a result shower filters are highly effective filters.

While existing shower filters are ideal in establishing and maintaining a high quality environment within a pond, they suffer from significant drawbacks.

The filtered water from existing shower filters is gravity fed back to the pond, and as such the filter has to be located at a position higher than the level of the water to be filtered. Pumping water to a higher level requires a large pump which can be expensive to operate.

A consequence of the limitations of the position of these types of filters is that they are usually located in areas which are exposed to the elements. As a result there is an increased risk of damage to the filter and additionally heat loss can occur. Most existing shower filters are not aesthetically pleasing and are designed with an emphasis on performance rather than eye appeal. Ideally therefore these types of filter should be hidden from view. In practice however, when landscaping the area around a pond, it can be difficult to hide a pump fed shower filter which has to be positioned above the surface of the water level.

German Patent Publication No. DE3805770A1 describes a pond filtration apparatus. The apparatus must be installed above the level of the water in the pond or aquarium to be filtered and is configured to control the output of filtered water at periodic intervals.

It is a principal aim of the present invention to provide filtration apparatus which operates effectively when positioned at or below the level of the water and which addresses the problems of the known devices discussed above.

According to the present invention, there is provided pond filtration apparatus adapted to allow fluid to be gravity fed into the apparatus and arranged for connection to a pump to allow the filtered fluid to be pumped out of the apparatus, the apparatus comprising:
- a filter chamber having a fluid inlet and a fluid outlet, and adapted to house a filter medium;
- a spray head in communication with the fluid inlet and moveable between an open position wherein the spray head is spaced from the fluid inlet and is adapted to dispense fluid over the filter medium, and a closed position wherein the spray head engages with the fluid inlet and prevents the flow of fluid therethough; and
- a fluid control valve connected to the spray head and adapted to control said movement of the spray head between its open and closed positions in response to the level of fluid within the filter chamber,
characterised in that, the fluid inlet comprises an inlet nozzle substantially in-line with the vertical axis of the filter chamber and the inlet nozzle, the spray head and the control valve are in vertical alignment.

The term "fluid" as used herein should be construed as meaning any fluid to be filtered and in this particular application will be construed as pond water.

The filter medium to be housed within the filter chamber may be any substance capable of removing impurities and organic waste from the pond water, such as fish waste, excess food or decaying organic material.

Preferably, the pond filtration apparatus further comprises a divider in the filter chamber defining an upper section for housing a filter medium and a lower section, said divider being adapted to maintain said filter medium in the upper section but to permit the flow of fluid through to the lower section: In this arrangement, the fluid can dispense through the filter medium which encourages oxygen infusion into the fluid, thus facilitating the filtering process and the fluid can then settle in the lower section. By controlling the position of the spray head relative to the fluid inlet, the level of fluid in the lower section determines the amount of fluid which is able to enter the filter chamber.

Ideally, the fluid inlet is located in the upper section and the fluid outlet is located in the lower section so that the filtered water can settle in the lower section remote from the filter medium, where it can be returned to the pond.

The pond filtration apparatus is adapted to enable fluid to automatically flow into the apparatus under the effect of gravity. In this way, a pump can be connected to the apparatus to pump the filtered fluid back to the pond.

In order for the filter apparatus to work effectively, it is vital that the amount of fluid entering the filter chamber is controlled. To facilitate this, the fluid control valve may comprise a buoyant member adapted to float on fluid in the lower section. The position of the buoyant member is thus determined by the level of fluid in the lower section. As the buoyant member is connected to the spray head, the distance of the spray head from the fluid inlet is determined by the level of fluid in the lower section.

As described above, the spray head is moveable between an open position and a closed position. In an open position the spray head is spaced from the fluid inlet. The closer the spray head to the fluid inlet the greater the restriction of flow into the filter chamber. The spray head moves into a closed position when the level of fluid within the lower section reaches a maximum. In this position, the spray head engages the fluid inlet and the flow of water into the fluid chamber is prevented. When the filtered fluid flows through the outlet, the level of fluid in the lower chamber reduces and the distance of the spray head from the fluid inlet increases.

The fluid inlet comprises an inlet nozzle substantially in-line with the vertical axis of the filter chamber. In this way, the fluid may be introduced into the centre of the filter chamber. The fluid inlet may allow the flow of fluid into the chamber from one or more points, with all fluid flowing to the centrally disposed nozzle. The inlet nozzle, the spray head and the control valve are in vertical alignment to enable effective control of the spray head with respect to the nozzle. When the spray head is in a closed position, it engages the inlet nozzle of the fluid outlet, so as to prevent the flow of fluid into the fluid chamber. The spray head is arranged so that fluid flowing through the nozzle falls directly onto the spray head to be dispersed thereby. This enables the fluid to be distributed effectively over the filter medium.

A protective housing may be provided around the periphery of the fluid control valve to isolate said valve from the filter medium housed within the chamber. The protective housing allows the fluid control valve to operate without being affected by the introduction of filter medium into, and the flow of fluid through, the chamber.

In a preferred embodiment, the filtering apparatus further comprises an outer chamber in which the filter chamber is housed, the outer chamber having a further fluid inlet and being in communication with the inlet of the filter chamber. This arrangement allows greater control over the level of water which is permitted to flow into the filter chamber.

The filtration apparatus may be installed within a pond or adjacent a pond at the level of, or even below the water level of, the pond. In this arrangement, the filtration apparatus does not require a pump to feed the pond water to the chamber. When installed the pond water simply flows through the fluid inlet and into the filter chamber under the effect of gravity. A pump is required in this arrangement to enable the filtered fluid to travel back to the pond. However, pumping fluid back to the pond can be achieved from a lower level and over a shorter distance than would be required to supply the fluid to the apparatus and thus consumes less power.

By way of example only, one specific embodiment of pond filtration apparatus of this invention will now be described in detail, reference being made to the accompanying drawings in which:-
Figure 1 is a perspective view of the pond filtration apparatus of the present invention with the spray head in an open position;
Figure 2 is a perspective view of the pond filtration apparatus of the present invention with the spray head in a closed position;
Figure 3 is a perspective view of the fluid control valve of the pond filtration apparatus of Figures 1 and 2;
Figure 4 is a plan view of the pond filtration apparatus of Figures 1 to 3; and
Figure 5 is a cross-sectional side view of the pond filtration apparatus of Figures 1 to 4.

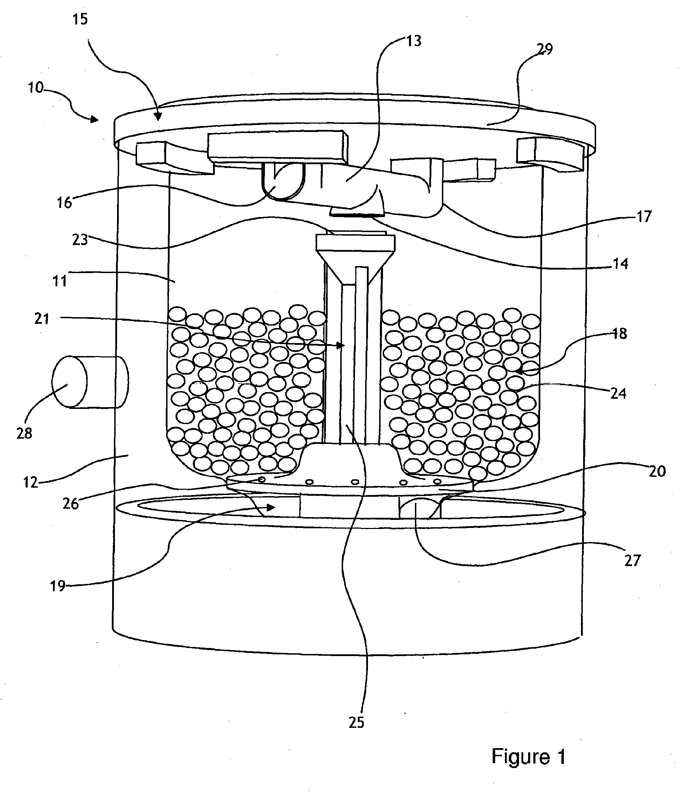

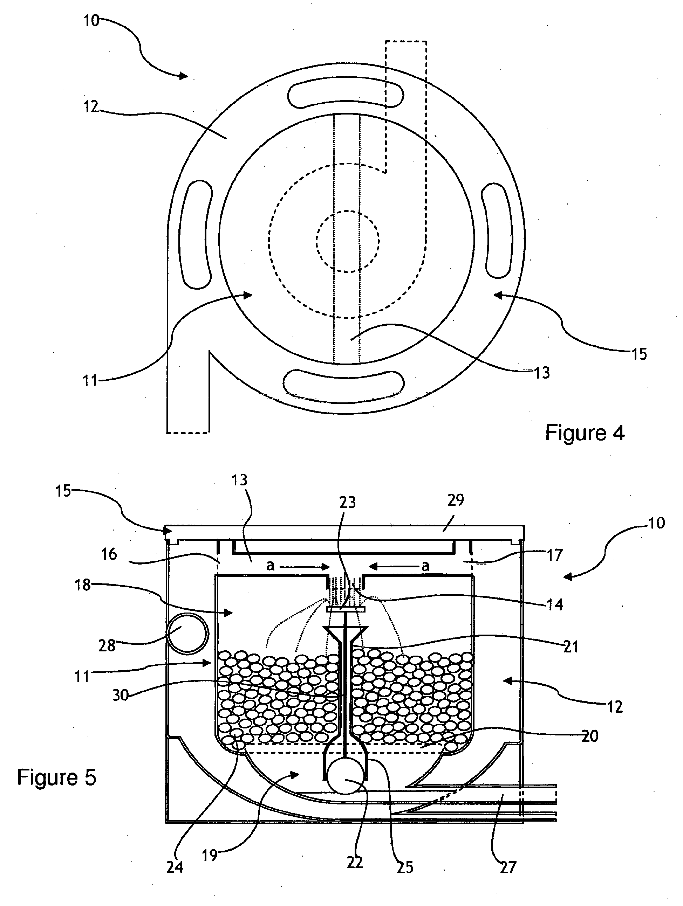

Referring to Figures 1 to 5 there is shown pond filtration apparatus 10 having a filter chamber 11 housed within an outer chamber 12. The filter chamber 11 is provided with a fluid inlet 13 which permits the flow of water into the filter chamber 11. The fluid inlet 13 comprises a tubular structure having a nozzle 14 which as can be seen in Figure 4, is centrally disposed within the filter chamber 11. The fluid inlet 13 is located adjacent the top 15 of the filter chamber 11 and is adapted to allow water to flow in from two regions 16, 17 around the filter chamber 11 and through the nozzle 14. The filter chamber 11 is divided into an upper section 18 and a lower section 19 by a divider 20. The filter chamber 11 further comprises a fluid control valve 21 adapted to control the flow of water into the filter chamber 11.

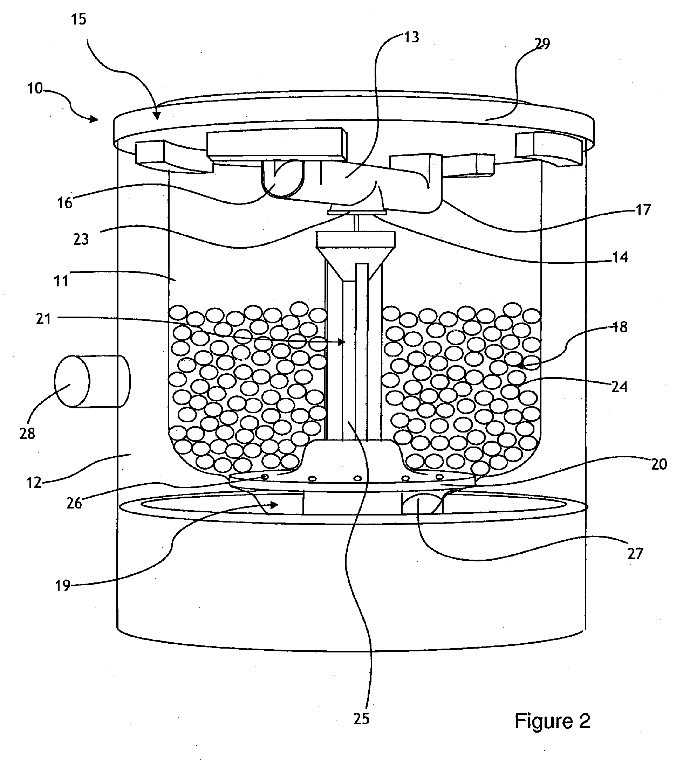

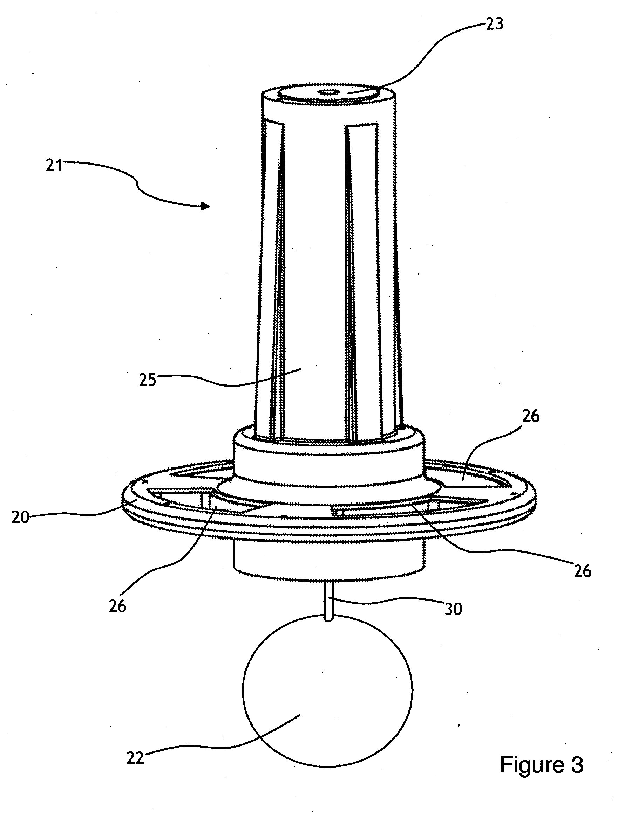

As best shown in Figure 3 the fluid control valve 21 comprises a ball-shaped buoyant member 22. The buoyant member 22 is located in the lower section 19 of the filter chamber 11 and is connected to a spray head 23 by a tubular rod 30. In use, the buoyant member 22 is adapted to float on filtered water which has settled in the lower section 19 of the filter chamber 11. Movement of the buoyant member 22 causes movement of the spray head 23 with respect to the nozzle 14. The spray head 23 is movable between an open position, as shown in Figure 1, where it is spaced from the nozzle 14 and water is free to flow into the filter chamber 11 and a closed position, as shown in Figure 2 where it engages the nozzle 14 and prevents the flow of water therethrough.

The upper section 18 of the filter chamber 11 is adapted to contain a filter medium 24 and the fluid control valve 21 is isolated from the filter medium 24 by a protective housing 25. The divider 20 maintains the filter medium 24 in the upper section 18 of the filter chamber 11 but has openings 26 provided therethrough which allow the water to flow through to the lower section 19. The filter chamber 11 further comprises a fluid outlet 27 located in the lower section 19 for the flow of filtered water out of the filtration apparatus 10.

The outer chamber 12 includes a further fluid inlet 28 which is adapted to allow water from a pond or aquarium to flow into the filtration apparatus 10 automatically under the effect of gravity. In this arrangement the filtration apparatus 10 may be installed at the same level or even beneath the level of the pond water, which is to be filtered. Once the water has filled up the outer chamber 12 it flows into the fluid inlet 13 of the filter chamber 11 in the direction a as shown in Figure 5 and through the nozzle 14. The spray head 23 is shaped to enable water flowing from the nozzle 14 to fall thereupon and to be dispensed over filter medium 24 housed within the upper section 18 of the filter chamber 11. The water is dispersed through the filter medium 24 to be filtered thereby and passes through the divider 20 into the lower section 19 of the filter chamber 11 where it is pumped back to the pond.

The buoyant member 22 floats upon the filtered water which has settled in the lower section 19 before being pumped back to the pond. The greater the level of water within the lower section 19 the closer the spray head 23 is to the nozzle 14, as shown in Figure 5. When the amount of water within the lower section 19 of the filter chamber 11 has reached a maximum level, the spray head 23 will be in its closed position as shown in Figure 2. The spray head 23 will remain in the closed position until the level of water within the lower section 19 is reduced.

The filtration apparatus 10 includes a removable lid 29 which allows access into the filter chamber 11 to facilitate the placing of filter medium 24 therein and also to enable maintenance thereof.

## Claims

1. Pond filtration apparatus adapted to allow fluid to be gravity fed into the apparatus and arranged for connection to a pump to allow the filtered fluid to be pumped out of the apparatus, the apparatus comprising:
- a filter chamber having a fluid inlet and a fluid outlet, and adapted to house a filter medium;
- a spray head in communication with the fluid inlet and moveable between an open position wherein the spray head is spaced from the fluid inlet and is adapted to dispense fluid over the filter medium, and a closed position wherein the spray head engages with the fluid inlet and prevents the flow of fluid therethough; and
- a fluid control valve connected to the spray head and adapted to control said movement of the spray head between its open and closed positions in response to the level of fluid within the filter chamber,
**characterised in that**, the fluid inlet comprises an inlet nozzle substantially in-line with the vertical axis of the filter chamber and the inlet nozzle, the spray head and the control valve are in vertical alignment.

2. Pond filtration apparatus as claimed in claim 1, further comprising a divider in the filter chamber defining an upper section for housing a filter medium and a lower section, said divider being adapted to maintain said filter medium in the upper section but to permit the flow of fluid through to the lower section.

3. Pond filtration apparatus as claimed in claim 2, wherein the fluid inlet is located in the upper section and the fluid outlet is located in the lower section.

4. Pond filtration apparatus as claimed in claim 2 or claim 3, wherein the fluid control valve comprises a buoyant member adapted to float on fluid in the lower section.

5. Pond filtration apparatus as claimed in any of the preceding claims, wherein when in a closed position the spray head engages the inlet nozzle.

6. Pond filtration apparatus as claimed in any of the preceding claims, wherein a protective housing is provided around the periphery of the fluid control valve to isolate said valve from filter medium housed within the chamber.

7. Pond filtration apparatus as claimed in any of the preceding claims further comprising an outer chamber in which the filter chamber is housed, the outer chamber having a further fluid inlet and wherein the outer chamber is in communication with the fluid inlet of the filter chamber.

8. Pond filtration apparatus as claimed in any of the preceding claims, and adapted to be mounted in or adjacent a pond at or below the water level of said pond.

## Patentansprüche

1. Teichfiltervorrichtung, die ausgebildet ist, um ein Zuführen eines Fluids in die Vorrichtung mittels Gravitation zu ermöglichen, und zum Verbinden an eine Pumpe eingerichtet ist, um ein Pumpen des gefilterten Fluids aus der Vorrichtung zu ermöglichen, wobei die Vorrichtung umfasst:
- eine Filterkammer, die zum Aufnehmen eines Filtermediums ausgebildet ist, mit einem Fluideinlass und einem Fluidauslass;
- einen Sprühkopf in Verbindung mit dem Fluideinlass, der zwischen einer geöffneten Position, in der der Sprühkopf von dem Fluideinlass beabstandet und zum Verteilen des Fluids über das Filtermedium ausgebildet ist, und einer geschlossenen Position, in der der Sprühkopf mit dem Fluideinlass in Eingriff steht und den Durchfluss des Fluids verhindert, bewegbar ist; und
- ein Fluidsteuerventil, das mit dem Sprühkopf verbunden und zum Steuern der Bewegung des Sprühkopfes zwischen seiner geöffneten und geschlossenen Position in Abhängigkeit vom Fluidpegel innerhalb der Fluidkammer ausgebildet ist;
**dadurch gekennzeichnet, dass** der Fluideinlass eine Einlassdüse aufweist, die im Wesentlichen in einer Linie mit der vertikalen Achse der Filterkammer ist und dass die Einlassdüse, der Sprühkopf und das Steuerventil vertikal ausgerichtet sind.

2. Teichfiltervorrichtung nach Anspruch 1, **dadurch gekennzeichnet, dass** ein Teiler in der Filterkammer vorgesehen ist, der einen oberen Bereich zum Aufnehmen eines Filtermediums und einen unteren Bereich definiert, wobei der Teiler zum Aufnehmen des Filtermediums in dem oberen Bereich und zum Ermöglichen eines Durchflusses des Fluids hindurch in den unteren Bereich ausgebildet ist.

3. Teichfiltervorrichtung nach Anspruch 2, **dadurch gekennzeichnet, dass** der Fluideinlass im oberen Bereich angeordnet ist und der Fluidauslass im unteren Bereich angeordnet ist.

4. Teichfiltervorrichtung nach Anspruch 2 oder 3, **dadurch gekennzeichnet, dass** das Fluidsteuerventil einen Schwimmkörper aufweist, der zum Schwimmen in dem Fluid im unteren Bereich ausgebildet ist.

5. Teichfiltervorrichtung nach einem der vorhergehenden Ansprüche, **dadurch gekennzeichnet, dass** der Sprühkopf in der geschlossenen Position in Eingriff mit der Einlassdüse ist.

6. Teichfiltervorrichtung nach einem der vorhergehenden Ansprüche, **dadurch gekennzeichnet, dass** ein Schutzgehäuse um das Äußere des Fluidsteuerventils vorgesehen ist, um das Ventil von dem in der Kammer aufgenommenen Filtermedium zu trennen.

7. Teichfiltervorrichtung nach einem der vorhergehenden Ansprüche, **dadurch gekennzeichnet, dass** eine äußere Kammer vorgesehen ist, in der die Filterkammer aufgenommen ist, wobei die äußere Kammer einen weiteren Fluideinlass hat, und wobei die äußere Kammer in Verbindung mit dem Fluideinlass der Filterkammer ist.

8. Teichfiltervorrichtung nach einem der vorhergehenden Ansprüche, **gekennzeichnet durch** eine Ausbildung zum Anordnen in oder angrenzend an einem Teich in Höhe oder unterhalb des Wasserspiegels des Teichs.

## Revendications

1. Dispositif de filtration de bassin adapté pour permettre à un fluide d'être amené par gravité dans le dispositif et disposé en vue de sa connexion à une pompe pour permettre au fluide filtré d'être pompé hors du dispositif, ledit dispositif comprenant :
- une chambre de filtration ayant une arrivée de fluide et une sortie de fluide, et adaptée pour contenir un milieu filtrant ;
- une tête d'atomisation communiquant avec l'arrivée de fluide et mobile entre une position ouverte dans laquelle la tête d'atomisation est écartée de l'arrivée de fluide et est adaptée pour distribuer le fluide par-dessus le milieu filtrant, et une position fermée dans laquelle la tête d'atomisation s'engage avec l'arrivée de fluide et empêche l'écoulement du fluide à travers celui-ci ; et
- une vanne de régulation du fluide connectée à la tête d'atomisation et adaptée à réguler ledit mouvement de la tête d'atomisation entre des positions ouverte et fermée en réponse au niveau du fluide se trouvant dans la chambre de filtration,
**caractérisé en ce que** l'arrivée de fluide comprend une buse d'arrivée sensiblement alignée avec l'axe vertical de la chambre de filtration et la buse d'arrivée, la tête d'atomisation et la vanne de régulation sont disposées verticalement.

2. Dispositif de filtration de bassin tel que revendiqué dans la revendication 1, comprenant en outre un diviseur à l'intérieur de la chambre de filtration définissant une partie supérieure destinée à recevoir un milieu filtrant et une partie inférieure, ledit diviseur étant adapté pour maintenir ledit milieu filtrant dans la partie supérieure, mais également pour permettre l'écoulement du fluide à travers la partie inférieure.

3. Dispositif de filtration de bassin tel que revendiqué dans la revendication 2, dans lequel l'arrivée de fluide est située dans la partie supérieure et la sortie de fluide est située dans la partie inférieure.

4. Dispositif de filtration de bassin tel que revendiqué dans la revendication 2 ou la revendication 3, dans lequel la vanne de régulation du fluide comprend un organe de flottaison adapté pour flotter sur le fluide dans la partie inférieure.

5. Dispositif de filtration de bassin tel que revendiqué dans l'une quelconque des revendications précédentes, dans lequel lorsqu'elle se trouve dans la position fermée la tête d'atomisation s'engage avec la buse d'arrivée.

6. Dispositif de filtration de bassin tel que revendiqué dans l'une quelconque des revendications précédentes, dans lequel un boîtier de protection est réalisé autour de la périphérie de la vanne de régulation du fluide afin d'isoler ladite vanne du milieu filtrant contenu dans la chambre.

7. Dispositif de filtration de bassin tel que revendiqué dans l'une quelconque des revendications précédentes comprenant en outre une chambre extérieure à l'intérieure de laquelle la chambre de filtration est placée, la chambre extérieure possédant une arrivée de fluide supplémentaire et dans lequel la chambre extérieure communique avec l'arrivée de fluide de la chambre de filtration.

8. Dispositif de filtration de bassin tel que revendiqué dans l'une quelconque des revendications précédentes et adapté pour être installé à l'intérieur de ou adjacent à un bassin ou sous le niveau d'eau dudit bassin.
